# EUROPEAN PATENT APPLICATION

(11) **EP 0 617 422 A2**
(43) Date of publication of application: **28.09.1994**
(21) Application number: 94103671.7
(22) Date of filing: 10.03.1994
(51) Int. Cl.: G11B 19/22, G11B 19/20

(54) **Optical disk apparatus having a mechanism of stopping revolution of optical disk and method of stopping the same**

(30) Priority: 26.03.1993 JP 68774/93
(71) Applicant: KABUSHIKI KAISHA TOSHIBA, Kawasaki-shi, Kanagawa-ken 210 (JP)
(72) Inventor: Takeuchi, Ryoji, c/o Intell. Property Div., Minato-ku, Tokyo 105 (JP)
(74) Representative: Lehn, Werner, Dipl.-Ing.

(57) **Abstract**

An optical disk apparatus comprises a spindle motor (2) for revolving an optical disk, a motor (54) driver for supplying a drive signal to the spindle motor (2), and a frequency comparator (52) for comparing an FG pulse generated from a pulse generator (50) and a spindle motor clock generated from a clock control circuit (56). A CPU (23) transmits a drive signal to the motor driver (54) such that a difference signal supplied from the frequency comparator becomes zero. In order to decelerate the spindle motor (2), the CPU (23) computes stop time of the spindle motor (2) in advance based on a constant revolution speed, a decelerating revolution speed of the spindle motor (2) being decelerated, and time required until the constant revolution speed reaches the decelerating revolution speed, and no power for stopping the motor (2) is applied from the motor driver to the spindle motor at the stop time.

## Description

The present invention relates to an optical disk apparatus for recording/reproducing information on/from an optical disk having recording tracks and a method of stopping revolution of the optical disk and, more particularly, to an improvement in a control system for stopping revolution of a spindle motor of an optical disk apparatus.

An optical disk apparatus for recording/reproducing information on/from an optical disk having recording tracks by a laser beam emitted from a semiconductor laser mounted on an optical head, has been put into practical use.

In this type of optical disk apparatus, an optical head is moved in the radial direction of an optical disk, that is, in the direction perpendicular to the tracks of the optical disk at high speed by a linear motor or a linear actuator thereby to read information from the tracks. More specifically, when the optical head is moved by the linear motor, a laser beam emitted from the optical head is moved, and a beam spot formed on the optical disk is moved to a target track. By doing so, information is optically read out in sequence from the tracks of the rotating optical disk.

In the above optical disk apparatus, the optical disk is rotated at high speed by a spindle motor. The following is a conventional control method of stopping the spindle motor. The revolution speed of the spindle motor is monitored by a frequency generator, and is controlled by the pulse (FG pulse) generated from the frequency generator in accordance with the monitored revolution speed. In order to stop the rotation of the optical disk, the spindle motor, which is revolving at a high constant revolution speed, is decelerated to a predetermined revolution speed 1/3 to 1/4 the constant revolution speed, and the current flowing to the spindle motor revolved at this predetermined revolution speed, is cut off.

In the conventional control method of stopping the spindle motor, the spindle motor is stably decelerated and, when its revolution speed reaches a predetermined value, the current for energizing the spindle motor is cut off. Since, however, a spindle motor has its own torque or inertia, there is a case where the spindle motor cannot be stopped when it is decelerated or the spindle motor rotates reversely when it is stops. For this reason, a mechanical brake is required to completely stop the spindle motor.

Assuming that an optical disk having a standard inertia is rotated by a spindle motor, the spindle motor is stably decelerated and stopped when a predetermined time elapses after the current is cut off when its revolution speed reaches a predetermined value. If, however, an optical disk having an inertia smaller than a standard one is decelerated at the same torque, the spindle motor is stopped and starts to rotate reversely before the predetermined time elapses. If an optical disk having an inertia larger than a standard one is decelerated at the same torque, the spindle motor is not stopped but rotating even after the predetermined time elapses.

It is an object of the present invention to provide an optical disk apparatus having a stop control system capable of reliably stopping revolution of a spindle motor.

According to a first aspect of the present invention, there is provided a disk control apparatus, comprising:
revolving means for revolving a recording medium of disk type at a constant speed;
decelerating means for decelerating the revolving means when the recording means is required to stop its revolution;
detecting means for detecting a revolution speed of the recording medium;
computing means for computing a stop schedule for the recording medium and producing a revolving stop time of the recording medium, from the constant speed, a predetermined deceleration speed smaller than the constant speed and a deceleration period between a start of energizing the decelerating means and an deceleration time at which the deceleration speed is detected by the detecting mean; and
means for cutting off the energization of the decelerating means at the revolving stop time in accordance with the stop schedule.

According to a second aspect of the present invention, there is provided a disk control apparatus, comprising:
revolving means for revolving a recording medium of disk type at a constant revolution speed;
setting means for setting a predetermined deceleration speed smaller than the constant revolution speed;
decelerating means for decelerating the revolving means unit a constant tongue when the recording medium is required to stop its revolution;
detecting means for detecting that a deceleration speed is reached to the predetermined deceleration speed set by the setting means when the revolving means is decelerated;
measuring means for measuring a deceleration period between a start of energizing the decelerating means and a time at which the deceleration speed is detected by the detecting means;
computing means for computing a stop schedule and producing a revolving stop time from the constant speed, the deceleration speed and the deceleration period; and
means for cutting off the energization of the decelerating means at the revolving stop time in accordance with the stop schedule.

According to a third aspect of the present invention, there is provided a disk control apparatus, comprising:
setting means for setting first and second revolution speed of a recording medium, the first revolution speed larger than the second revolution speed;
revolving means for revolving the recording medium;
means for energizing the revolving means to decelerate a revolution of the recording means in accordance to a predetermined stop schedule;
means for detecting the first and second revolution speeds;
means for computing the predetermined stop schedule and estimating a revolution stop time for the first and second revolution speeds and a deceleration period corresponding to difference between the first and second speeds; and
deenergizing means for deenergizing the energizing means to prevent the revolving means from revolving the recording medium at the estimated revolution stop time.

This invention can be more fully understood from the following detailed description when taken in conjunction with the accompanying drawings, in which:
FIG. 1 is a block diagram showing a motor control circuit of an optical disk apparatus according to an embodiment of the present invention;
FIG. 2 is a perspective view schematically showing the optical disk apparatus according to the embodiment of the present invention;
FIG. 3 is a block diagram depicting a circuit arrangement of the optical disk apparatus shown in FIG. 2;
FIG. 4 is a graph representing the relationship between time and revolution speed of a spindle motor relative to a stop program applied to the motor control circuit shown in FIG. 1;
FIG. 5 is a graph representing the relationship between time and constant torque control applied to the motor control circuit shown in FIG. 1; and
FIG. 6 is a flowchart relative to the stop program applied to the motor control circuit shown in FIG. 1.

An optical disk apparatus according to one embodiment of the present invention will now be described, with reference to the accompanying drawings.

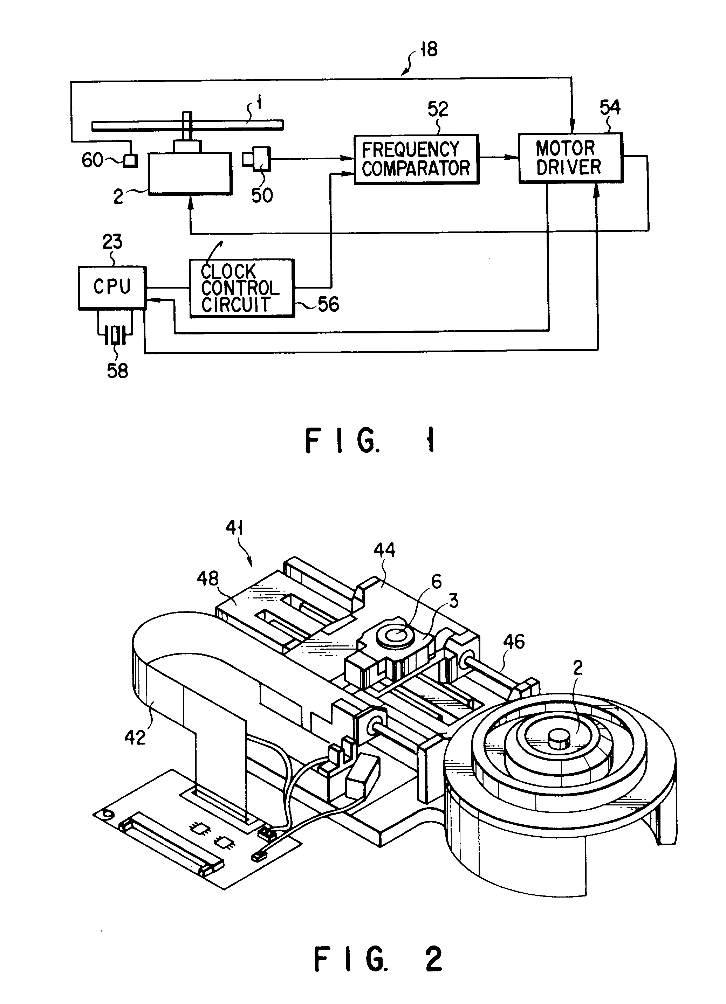

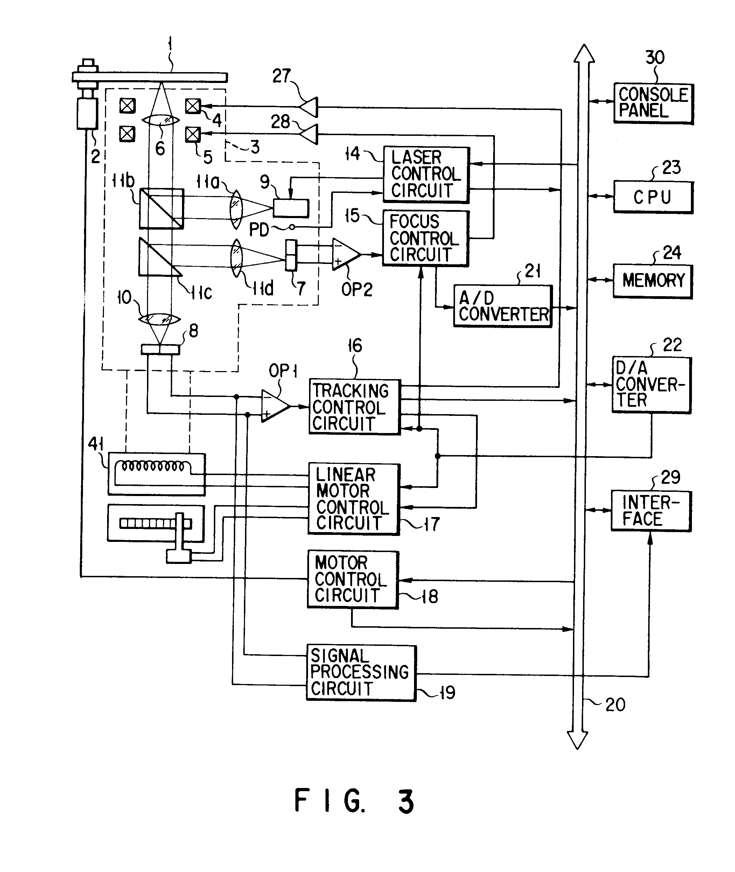

FIG. 1 is a block diagram of rotation mechanism of the optical disk apparatus, FIG. 2 is a perspective view schematically showing an appearance of the optical disk apparatus, and FIG. 3 is a block diagram showing a circuit arrangement of the optical disk apparatus.

As shown in FIG. 3, recording tracks (grooves), not shown, are formed spirally or concentrically on the surface of an optical disk 1 (optical recording medium), and the optical disk 1 is rotated, for example, at a constant angular velocity by a spindle motor 2. The spindle motor 2 is controlled by a motor control circuit 18, which will be described later. An optical head 3 is disposed under the optical disk 1, and a light beam is emitted from the optical head 3 toward the optical disk 1. Information is optically reproduced from the optical disk 1 or recorded thereon by the light beam. A recording film on which pits are to be formed, a recording film using variations in phase, or a multilayer recording film is employed for the optical disk 1. Further, the optical disk 1 can be replaced with a photomagnetic disk for photomagnetically recording/reproducing information.

The optical head 3 includes an object lens 6 supported by a wire or a plate spring (not shown), and the object lens 6 can be moved in its focusing direction (in the direction of the optical axis) by a drive coil 5 and moved in the tracking direction (in the direction perpendicular to the optical axis) by a drive coil 4.

A laser beam is emitted from a semiconductor laser beam emitter 9, which is driven by a laser control circuit 14, onto the optical disk 1 through a collimator lens 11 a, half prism 11 b, and object lens 6. The light beam reflected by the optical disk 1 penetrates the object lens 6 and half prism 11 b, and is separated into two light beams by a half prism 11 c. One of the two light beams is guided to a photodetector 7 via a focus detection optical system 11 d, and the other light beam is guided to a photodetector 8 via a track detection optical system 10. The laser beam emitted from the semiconductor laser beam emitter 9 is detected by a detector PD, and its corresponding signal is fed back to the laser control circuit 14, with the result that the output of the light beam is stabilized.

A detection signal is supplied from the photodetector 7 for focus detection to an operation amplifier OP2, and its difference signal is generated therefrom. The difference signal is then supplied to a focus control circuit 15. The focus control circuit 15 generates a focus signal corresponding to the difference signal, and the focus signal is transmitted to the drive coil 5 through an amplifier 28. Thus, the object lens 6 is moved in the direction of the optical axis to be kept in the focus state, and the minimum beam spot is formed on the optical disk 1.

A detection signal is supplied from the photodetector 8 for tracking detection to an operation amplifier OP1, described later, and its difference signal is generated therefrom. The difference signal is then supplied to a tracking control circuit 16. The tracking control circuit 16 generates a tracking signal corresponding to the difference signal, and the tracking signal is transmitted to the drive coil 4 trough an amplifier 27. Thus, the direction of the object lens 6 is changed to be kept in the tracking state, and a tracking guide is traced with the laser beam. The tracking signal is also transmitted to a linear motor control circuit 17. A linear motor 41 is driven in response to a drive signal from the control circuit 17, and the optical head 3 is moved in the radial direction of the optical disk 1.

The focus signal and tracking signal are supplied to a CPU 23 through an A/D converter 21 and a bus 20 and processed for control relative to the focus control and tracking control. The linear motor control circuit 17 applies a voltage, which corresponds to a difference between an actual speed signal delivered from a track count signal and a reference speed signal supplied from the CPU 23 through a D/A converter 22 in response to an instruction from a console panel 30, to a drive coil in the linear motor 41, thereby to move the optical head 3 to a predetermined track.

An addition signal of detection signals output from the respective photodetection cells of the photodetector 8 in the focusing and tracking states is influenced by variations in reflectance of light from the pits (recording information) formed on the tracks. The addition signal is supplied to a signal processing circuit 19, in which recording information and address information (track numbers, sector numbers, etc.) are reproduced. A reproduction signal (reproduction information) generated in the signal processing circuit 19 is output to an information processing device (not shown) as an external device via an interface circuit 29.

As shown in FIG. 2, in the optical disk apparatus, the optical head 3 is disposed above a carriage 44 so that it can be moved in the radial direction of the spindle motor 2 on which the optical disk 1 is placed. In other words, the carriage 44 is supported movably by a guide shaft 46 arranged in the radial direction of the optical disk 1, a magnetic circuit 48 of the linear motor 41 for moving the carriage 44 is provided under the carriage 44. In order to transmit a detection signal from the optical head 3 and supply a drive current for driving a drive unit in the optical head, a flexible printed circuit 42 is connected to the carriage 44 and to an external circuit. Therefore, even if the carriage 44 is moved, the drive current can be supplied to the optical head 3, and the detection signal can be sent from the optical head to the external circuit.

As shown in FIG. 1, the motor control circuit 18, which generates a drive signal for driving the spindle motor 2, includes a frequency generator or a pulse generator 50 for generating an FG pulse having a frequency corresponding to the revolution of the spindle motor 2, and a frequency comparator 52, connected to the pulse generator 50, for comparing a frequency corresponding to a target revolution speed with the frequency of the FG pulse. The target frequency is supplied to the frequency comparator 52 as a spindle motor clock generated from a clock control circuit 56.

The frequency comparator 52 compares the frequency of the spindle motor clock and that of the FG pulse to produce a difference signal. The difference signal is supplied to a motor driver 54, and the motor driver 54 transmits a drive signal to the spindle motor 2 in response to the difference signal. The spindle motor clock is determined by a clock control signal issued from the CPU 23 operated in response to a reference clock 58.

The CPU 23 generates a forward/reverse revolution control signal for giving an instruction of forward or reverse revolution to the motor driver 54 in accordance with a revolution control program read out from a memory 24 in response to an instruction from the console panel 30. Furthermore, a Hall element 60 is provided near the spindle motor 2 and transmits a decelerating revolution speed of the spindle motor to the motor driver 54 in order to decelerate and stop the spindle motor 2, and the decelerating revolution speed is then supplied to the CPU 23.

An operation of the motor control circuit 18 shown in FIG. 1, will now be described. When the spindle motor 2 starts to revolve, the CPU 23 sends an instruction for steady revolution to the clock control circuit 56 in response to a revolution start signal from the console panel 30. In response to the instruction for steady revolution, the motor driver 54 supplies a drive current to the spindle motor 2 to revolve the spindle motor 2, and the clock control circuit 56 divides the reference clock to generate a spindle motor clock. The frequency comparator 52 compares the frequency of the FG pulse generated from the pulse generator 50 and that of the spindle motor clock generated from the clock control circuit 56, and supplies a result of the comparison to the motor driver 54.

The motor driver 54 increases the frequency of the drive current based on the result of the comparison to gain the revolution speed of the spindle motor 2. If the frequency of the FG pulse generated from the pulse generator 50 coincides with that of the spindle motor clock generated from the clock control circuit 56, the spindle motor 2 is revolved at a target revolution speed. To revolve the spindle motor 2 at the target revolution speed, the spindle motor is driven by the motor driver 54 based on the result of the comparison.

The spindle motor 2 is stopped as follows. When a signal for stopping the spindle motor 2 revolving at, for example, constant revolution speed r1, is generated by means of the console panel 30, the CPU 23 supplies the signal to the clock control circuit 56 and motor driver 54 at time t1. In response to the signal, the clock control circuit 56 generates a spindle motor clock corresponding to the deceleration of the spindle motor. Therefore, the motor driver 54 reduces the frequency of drive current supplied to the spindle motor 2, based on the comparison result obtained from the frequency comparator 52, thus linearly decreasing the revolution speed of the spindle motor 2.

When the revolution speed of the spindle motor 2 decreases and then reaches a predetermined revolution speed r2 at time t2, a revolution speed signal corresponding to the revolution speed r2 is supplied from the Hall element 60 to the CPU 23 through the motor driver 54. In this state, the CPU 23 computes time t3 when the spindle motor 2 is stopped, from r1, t1, r2, and t2.

The CPU 23 supplies a reverse-revolution signal and a revolution stop signal to the motor driver 54 immediately before time t3 after a lapse of predetermined time, which is set by the inertia of the optical disk 1 or the like, after time t2. Thus the motor driver 54 temporarily supplies a current for reverse revolution to the spindle motor 2 to cut off the drive current at once. The torque of the spindle motor 2, which continues to revolve by its own inertia, is canceled since the current for reverse revolution serves as a brake, and the spindle motor is then stopped immediately by cutting off the drive current.

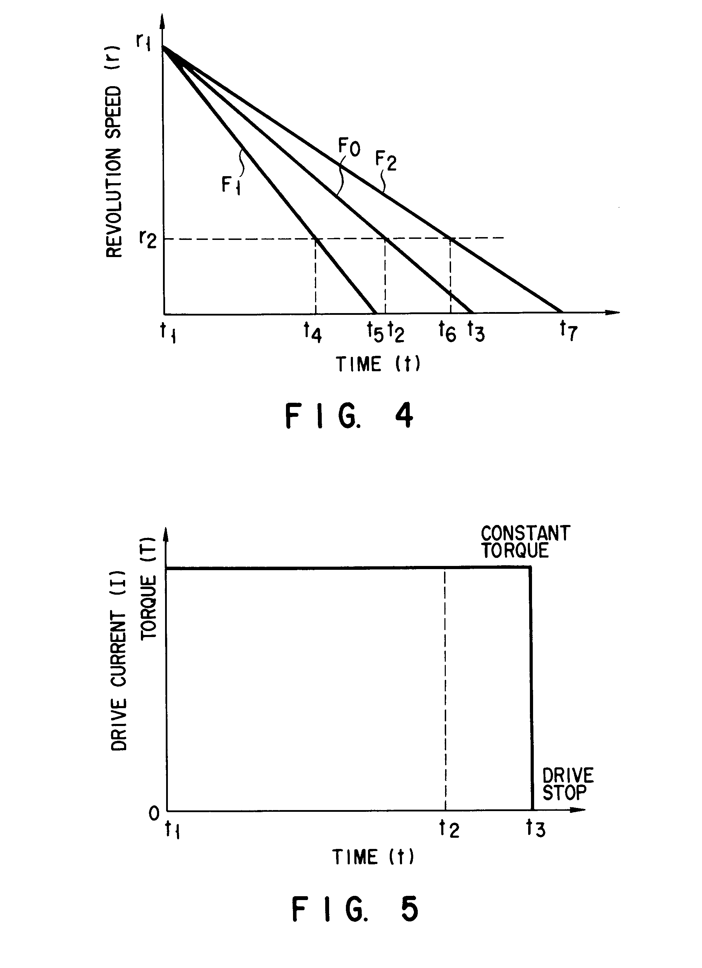

The foregoing operation of stopping the spindle motor 2 will now be described, with reference to the graphs shown in FIGS. 4 and 5. Since the torque at which the spindle motor 2 is driven is generally proportionate to the current supplied to the spindle motor, if the spindle motor 2 is driven by the constant current, it is controlled at the constant torque as shown in FIG. 5. Thus, the decreased revolution speed r to stop the spindle motor is expressed by the following linear function:
r = - at + r1
where a is a deceleration speed (rps/s), rl is an initial revolution speed (rps) at the beginning of deceleration, and t is the duration of stop operation.

Assuming that a certain time set while the spindle motor is decelerating is t2 and the time at which the spindle motor is stopped is t3, a triangle formed by coordinates (0, r1), (0, r2), and (t2, r2) is similar to a triangle formed by coordinates (t2, r2), (t2, 0), and (t3, 0), as shown in FIG. 4. Therefore, the following equation is established:
t3 - t2 = (r2/r1 - r2)(t2 - t1 )

If the deceleration time (t2 - -11) from t1 to t2 is calculated by the above equation, the time from time t2 at which the revolution speed of the spindle motor 2 reaches the predetermined revolution speed r2 to time t3 at which a stop signal is generated, can be obtained. Therefore, the stop time of the spindle motor 2 can be estimated, and the spindle motor 2 can be reliably stopped by cutting off the current immediately after an instantaneous brake is applied to the spindle motor 2 at the stop time t3.

In FIG. 4, a straight line F0 represents the relationship between the revolution speed of the optical disk 1 having a standard inertia, rotated by the spindle motor 2, and the time required for stopping the optical disk 1. The time required from t2 to time t3 is obtained from the line F0. Similarly, a straight line F1 indicates a case where an optical disk 1 having an inertia smaller than a standard one is rotated by the spindle motor 2. The time required from time t4 at which the revolution speed of the spindle motor reaches the predetermined revolution speed r2 to time t5 at which a stop signal is generated, can be obtained from the line F1. A straight line F2 shows a case where an optical disk 1 having an inertia larger than a standard one is rotated by the spindle motor 2. The time required from time t6 at which the revolution speed of the spindle motor reaches the predetermined revolution speed r2 to time t7 at which a stop signal is generated, can be obtained from the line F2. In either case, a brake is applied to the spindle motor 2 immediately before the stop time t3, t5, or t7 and then the current is cut off, thereby reliably stopping the spindle motor 2.

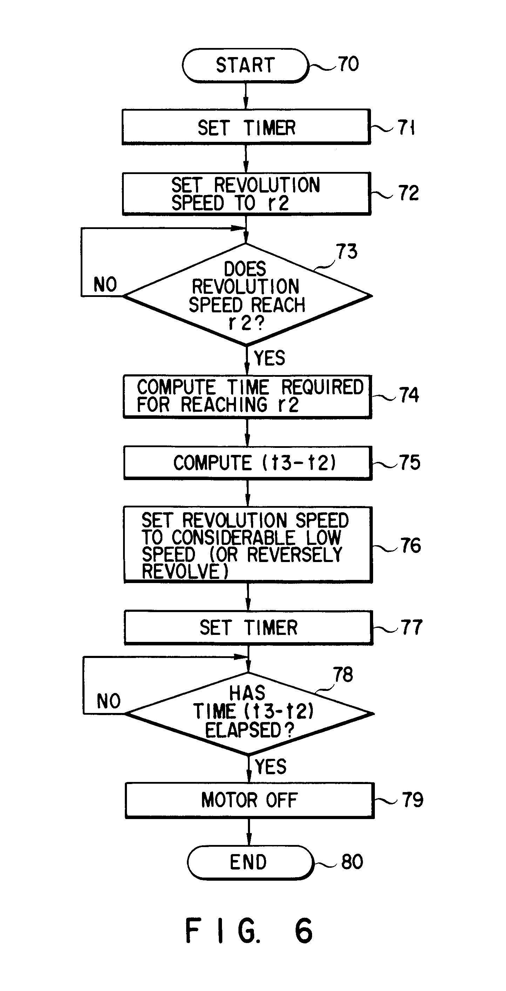

A program of the CPU 23 for stopping the spindle motor 2 will now be described, with reference to the flowchart shown in FIG. 6. When the program is started in response to an instruction input from the console panel 30 (STEP 70), the CPU 23 sets a timer for counting the duration of a stop operation thereby to start counting time (STEP 71). Simultaneously, the CPU 23 transmits a clock control signal indicative of deceleration to the clock control circuit 56 and issues a stop instruction to the motor driver 54, thereby to start decelerating the spindle motor 2.

When the spindle motor 2 starts to decelerate, the CPU 23 sets a predetermined decelerating revolution speed r2 based on which the stop time of the spindle motor is calculated (STEP 72). Then, the CPU 23 monitors the revolution speed of the spindle motor 2 (STEP 73) and, when it reaches r2, computes time required therefor (STEP 74). Based on this computation, time (t3 - t2) from the time when the revolution speed reaches r2 to the time when the spindle motor is stopped is computed (STEP 75).

If the stop time of the spindle motor 2 is computed as described above, the CPU 23 sets the revolution speed to a considerably lower value or issues an instruction for reversely revolving the spindle motor immediately before time t3 (STEP 76). After that, the CPU 23 sets the timer (STEP 77) and confirms whether the time (t3 - t2) has elapsed (STEP 78). At the time t3, the CPU 23 cuts off the current being supplied to the motor to completely stop the spindle motor 2 (STEP 79). The stop operation is thus completed (STEP 80).

Since, as described above, the stop time of the spindle motor 2 is computed in advance and the current is cut off at the computed time, the spindle motor can be reliably stopped.

The present invention is not limited to the above embodiment. Various changes and modifications can be made without departing from the scope of the invention. According to the above embodiment, a current for reversely revolving the spindle motor 2 is supplied from the motor driver 54 to the spindle motor when it is stopped. For example, a brake can be temporarily applied to the spindle motor instead of the current. It is thus possible to advance to the next step quickly in virtue of the no-load state immediately after the brake is applied.

Furthermore, the decelerating revolution speed of the spindle motor and the time for extracting the revolution speed, both of which are required for predicting the stop time, can be arbitrarily determined. If at least two sets of data representing the revolution speed of the decelerating spindle motor and the time (including the deceleration start time) are extracted, the spindle motor 2 can be stopped.

## Claims

1. A disk control apparatus, comprising:
revolving means (2) for revolving a recording medium (1) of disk type at a constant speed; and
decelerating means (18, 52, 54) for decelerating said revolving means (2) when the recording means (1) is required to stop its revolution;
characterized by further comprising:
detecting means (50, 60) for detecting a revolution speed of the recording medium;
computing means (23) for computing a stop schedule for the recording medium (1) and producing a revolving stop time of the recording medium (1), from the constant speed, a predetermined deceleration speed smaller than the constant speed and a deceleration period between a start of energizing said decelerating means (52, 54) and an deceleration time at which the deceleration speed is detected by said detecting mean; and
means (23) for cutting off the energization of said decelerating means (18, 52, 54) at the revolving stop time in accordance with the stop schedule.

2. The disk control apparatus according to claim 1, characterized in that said decelerating means (18, 52, 54) includes means (52) for comparing the revolution speed detected by said detecting means (50) with a target revolution speed and generating a difference signal therebetween, said decelerating means (18, 52, 54) drives said revolving means (2) in response to the difference signal.

3. The disk control apparatus according to claim 1, characterized in that said apparatus further comprises:
means (56) for generating a clock signal corresponding to the target revolution speed in response to an instruction from said computing means (23); and
means (52) for comparing the clock signal with a pulse signal generated from said detecting means (50) in accordance with the revolution speed, and
said decelerating means (54) drives said revolving means (2) in response to the difference signal.

4. The disk control apparatus according to claim 1, characterized in that said computing means (23) supplies a reverse-revolution signal to said decelerating means (54) immediately before generating a stop signal at the revolving stop time, and said decelerating means (54) temporarily supplies a drive signal for reversely revolving said revolving means (2) in response to the reverse-revolution signal, to said revolving means (2), thereby instantaneously cutting off the drive signal supplied from said decelerating means (54) to said revolving means (2), in response to the stop signal.

5. A disk control apparatus, characterized by comprising:
revolving means (2) for revolving a recording medium (1) of disk type at a constant revolution speed;
setting means (23) for setting a predetermined deceleration speed smaller than the constant revolution speed;
decelerating means (54) for decelerating said revolving means (2) unit a constant tongue when the recording medium (1) is required to stop its revolution;
detecting means (60, 50) for detecting that a deceleration speed is reached to the predetermined deceleration speed set by said setting means (23) when said revolving means is decelerated;
measuring means (23) for measuring a deceleration period between a start of energizing said decelerating means (54) and a time at which the deceleration speed is detected by said detecting means (50);
computing means (23) for computing a stop schedule and producing a revolving stop time from the constant speed, the deceleration speed and the deceleration period; and
means (23) for cutting off the energization of said decelerating means (54) at the revolving stop time in accordance with the stop schedule.

6. The disk control apparatus according to claim 5, characterized in that said apparatus further comprises:
means (56) for generating a clock signal corresponding to a target revolution speed in response to an instruction from said computing means (23); and
means (52) for comparing the clock signal with a pulse signal generated from said detecting means (50) in accordance with the revolution speed, and
said decelerating means (54) drives said revolving means (2) in response to the difference signal.

7. The disk control apparatus according to claim 5, characterized in that said computing means (23) supplies a reverse-revolution signal to said decelerating means (54) immediately before generating a stop signal at the stop time, and said decelerating means (54) temporarily supplies a drive signal for reversely revolving said revolving means (2) in response to the reverse-revolution signal, to said revolving means (54), thereby instantaneously cutting off the drive signal supplied from said decelerating means (54) to said revolving means (2), in response to the stop signal.

8. A disk control apparatus, characterized by comprising:
setting means (23) for setting first and second revolution speed of a recording medium (1), the first revolution speed larger than the second revolution speed;
revolving means (2) for revolving the recording medium (1);
means (54) for energizing said revolving means (2) to decelerate a revolution of said recording means (1) in accordance to a predetermined stop schedule;
means (50, 60) or detecting the first and second revolution speeds;
means (23) for computing the predetermined stop schedule and estimating a revolution stop time for the first and second revolution speeds and a deceleration period corresponding to difference between the first and second speeds; and
deenergizing means (23) for deenergizing said energizing means (54) to prevent said revolving means (2) from revolving the recording medium (1) at the estimated revolution stop time.

9. The disk control apparatus according to claim 5, characterized in that said decelerating means (54) includes means (50) for detecting the decelerating revolution speed, and said computing means (23) computes stop time of said revolving means (2) from the decelerating revolution speed detected from said detecting means (50), time required from when said revolving means (2) starts to decelerate until the revolution speed of said revolving means (2) reaches the decelerating revolution speed, and the constant revolution speed.

10. An disk control apparatus characterized by comprising:
means (2) for revolving a recording medium at a constant revolution speed;
means (50) for detecting the revolution speed of said revolving means;
means (54) for decelerating said revolving means in response to a drive signal; and
means (23) for computing stop time of said revolving means (54) from first and second decelerating revolution speeds of said revolving means (2) being decelerated by said decelerating means (54), and time required from the first decelerating revolution speed to the second decelerating revolution speed, thereby to cut off the drive signal supplied from said decelerating means (54) to said revolving means (2).

11. A method for stopping revolution of a recording medium, characterized by comprising the steps of:
revolving the recording medium (1) at a constant speed;
detecting a revolving speed of the recording medium (1);
decelerating the revolving of the recording medium (1);
calculating stop time of the decelerated recording medium from the constant revolving speed, a decelerating revolution speed of the recording medium and a time period from a start of the decelerating of the recording medium (1) to a time in which the recording medium is revolved at a predetermined speed; and
cutting off a energization of the revolving of recording medium (1) at the stop time.

12. The method according to claim 11, characterized in that said revolving step including a step of applying a constant revolving forge to the recording medium (1) in accordance to a comparison between the detected revolving speed and a target revolving speed.

13. The method according to claim 11, characterized in that said revolving step includes steps of generating a clock signal corresponding to the constant speed and comparing a pulse signal corresponding to the detected revolving speed with the clock signal to generate a difference signal between the clock signal and the pulse signal, the revolving of the recording medium (1) being controlled in response to the difference signal.

14. The method according to claim 11, characterized in that said cutting step includes a step of applying a reverse-revolution to the recording medium (1) immediately before the stop time.
